# EUROPEAN PATENT SPECIFICATION

(11) **EP 2 146 304 B1**
(45) Date of publication and mention of the grant of the patent: **17.08.2011**
(21) Application number: 09251626.9
(22) Date of filing: 23.06.2009
(51) Int. Cl.: G06K 7/08, G06K 7/00, H01Q 1/22, A01K 11/00

(54) **Method for detecting RFID transponders and transponder reader system**
Verfahren zur Erkennung eines RFID-Transponders und Transponderlesesystem
Procédé de détection de transpondeurs RFID et système de lecture

(30) Priority: 25.06.2008 GB 0811655
(43) Date of publication of application: 20.01.2010
(73) Proprietor: Shearwell Data Limited, Minehead, Somerset TA24 7AS (GB)
(72) Inventor: Tereszczak, Mark, Minehead, Somerset TA24 7AS (GB); Brown, David, Minehead, Somerset TA24 7AS (GB)
(74) Representative: Johnson, Richard Alan

(56) References cited:
- EP-A- 1 770 665
- WO-A-01/03237
- WO-A-2004/026025

## Description

This invention relates to antennas for transmitting signals to energise microchips in transponders. For example, it may relate to methods of operating antenna systems adapted for use in identifying livestock.

Antenna systems are used in a wide variety of situations. They are used in security systems in high street shops or for identifying animals in slaughterhouses or markets. The idea behind these systems is the same: the antenna transmits an electromagnetic field over a certain area. Transponders (e.g. radio frequency identification (RFID) tags) containing microchips are energised when their circuits lie across (i.e. at an angle to) field lines of the electromagnetic field. Energising the transponder causes it to emit a response signal. The same or another antenna can detect the response signal and identify the transponder which has entered the area. In the case of shop security systems, electronic tags are attached to items of clothing. When these tags are detected by the antennas positioned at the shop exit, an alarm sounds. Similarly, cattle can be given ear tags or carry stomach boluses with transponders that are energised by antennas mounted on the side of narrow passageways (races) through which they are herded. Thus the animals entering the cattle market or slaughterhouse can be identified. This is important for the control of disease.

A known method of detecting RFID tags is to mount a loop antenna on or in the side wall of a race such that the plane of the loop is parallel to the race. The antenna is set up as a series resonant circuit; when current flows through the antenna, an electromagnetic field is set up whose field lines extend around the edges of the antenna giving a toroidal shape. When a microchip in a transponder cuts those field lines (i.e. lies across or move through them), a current is induced in it, i.e. it is energised.

An alternative way of arranging the antenna is to have the plane of the loop perpendicular to the direction of the race. The antenna loop is of sufficient size so that the cattle can walk through it: this is known as a portal antenna. In this arrangement the field lines extend in the direction of the race.

It is important in cattle identification that no animals are missed. The systems described above have the disadvantage that there is a significant chance the transponder will not be energised because the microchip will be at the wrong angle. If the microchip is parallel to the field lines, i.e. it does not cut lines of different electromagnetic strength, then no current will flow in it and it will not be energised. This is more of a problem with ear tags than with boluses, because the ear tags are moved around when the cattle toss their heads.

A number of proposals have been made to provide an antenna which will detect a transponder whatever its orientation. GB 1599120 shows a first example, where two loop antennas were used, mounted with their planes perpendicular to one another. Each loop produced its own field, nominally perpendicular to each other. However, each field also affected the other due to mutual inductance, with the result that significant 'dead zones' where there was no or only a small field occurred.

US 4679046 teaches an alternative method, where a loop formed as a figure of eight is surrounded by a normal loop, the two loops being coplanar. This arrangement achieved the same effect as two perpendicularly positioned antennas, but still suffered from the problem of 'dead zones' due to mutual inductance between the loops. US 4679046 offered two solutions to the problem of 'dead zones': the first was to multiplex the two loops; the second was to introduce a phase shift between the currents in each loop to create a circularly polarised field. The latter arrangement is complicated because finding the correct phase shift can be difficult, and the phase shift circuit requires more components, thus added expense.

Multiplexing involves supplying one loop at a time with power in a short cycle so that the net effect over time is a field in both directions. This solves the problem of mutual inductance, but adds further problems in terms of the complexity of the system circuit and 'lost' time as explained below.

As mentioned above, a further limitation of known arrangements is that they only provide antennas whose fields are strong in two dimensions, i.e. the third dimension is only weakly covered; transponders aligned perpendicularly to the other fields (i.e. along their field lines) may not be detected. The solution proposed to this in US 4679046 is the introduction of a third antenna, with its plane perpendicular to the other antennas such that its field lines are in the weakly covered dimension. This is undesirable because of the cost involved in adding another component, especially if it too must either be multiplexed or given a phase shift, and because of the extra power required to give the system enough coverage.

Enough power needs to be provided to the antennas to give their fields enough range to cover the race. In addition to the cost of providing power, the power available for antennas is limited by laws governing radio frequency radiation emission. The antennas divide the power between them; therefore more antennas need more power to achieve the same range.

GB 2391710 discloses an antenna which with two parts is capable of providing a field with components in three dimensions, i.e. able to detect transponders at any orientation. In GB 2391710 the antenna configuration comprises a saddle-type antenna which straddles the race and a loop antenna on one side of the race with the plane of its loop aligned with the direction of the race. This two part configuration is able to provide field lines of comparable strength in three dimensions.

The arrangement of the two parts also provided an overall field with a very wide range of components. This means it is effective for and efficient at detecting a transponder in any orientation. However, whilst this antenna configuration improved overall coverage there are still some regions within the volume enclosed by the saddle where transponders at a certain orientation may escape detection.

WO 01/03237 discloses a coil antenna arrangement for energising a set of identification tags, in which alternating current flowing through a simple pair of opposed coaxial antennas is switched between being in phase and in antiphase. The independent claims are delimited against this prior art.

At its most general, the invention proposes switching the phase relationship between the signals used to power different parts of an antenna. The invention is based on the understanding that each phase relationship produces a different field pattern. Thus, the regions which may allow transponders having a certain orientation to escape detection may be different for each phase relationship. By selecting the phase relationships appropriately and performing the phase switching at a rate to ensure that any transponder travelling through the antenna range is exposed to each field pattern, the probability of a transponder escaping detection can be reduced.

According to the invention there is provided a method of detecting transponders moving along a detection path as set out in claim 1 and a transponder reader system as set out in claim 13.

The method may include switching back to the first phase relationship after determining if any transponders are energised by the second electromagnetic field. The method may include repeatedly switching between the first and second phase relationships.

The first and second signals may be derived from the same source. The source may be an AC power source. The first phase relationship may be an "in phase" relationship, e.g. in which a phase difference of 0° exists between the first and second power signals fed into their respective antenna parts. The second phase relationship may be an "out of phase" relationship, e.g. in which a non-zero phase difference exists at the input to the respective antenna parts. The phase difference may be 180°. Other phase differences may be introduced. The phase difference may be implemented by switching the feed direction of one of the first or second power signals. Alternatively, a phase shifting component may be included in the circuit.

In selecting the phase difference, an important factor is that the region or regions of weakness, i.e. regions in which transponders having a certain orientation may not be detected, are different for the fields corresponding to the first and second phase relationships. For example, the regions of weakness may occupy different spatial locations for the respective fields. Alternatively or additionally the regions of weakness may be for transponders with different orientations. Thus, for any given transponder orientation detection may be guaranteed because the fields corresponding to the first and second phase relationships do not share a region of weakness for the same transponder orientation at the same spatial location.

The switching may be achieved using conventional circuitry, e.g. flip flop switches or the like.

The first and second parts may be loops mounted on the race. In one embodiment the first and second parts may be side loops mounted on opposite sides of the race, with their planes parallel to the detection path. In another embodiment, the first part may be a side loop located adjacent the detection path with its plane in the longitudinal direction of the path and the second part may be a loop having longitudinally extending sections adjacent both sides of the detection path joined by arch portions which traverse the detection path, i.e. a saddle-type loop such as that disclosed in GB 2391710.

The longitudinally extending parts may be in the form of wings on each side of the detection path with two transverse sections spanning the detection path to join corresponding parts of the wings. The wings may be formed from at least one longitudinal portion connected to one or both of the transverse sections by at least one riser portion.

The wings may be U-shaped. The longitudinal portion may be the base of the U, and the riser portion being the arms. The riser portions may extend downwards relative to the detection path, and said transverse sections may extend under said detection path. Alternatively, the U may be a smooth curve.

The detection path may be defined by a passageway for animals, and the second part may be wrapped over the passageway with the longitudinally extending portions located in or adjacent side walls of said passageway.

The first and second parts are preferably coils of wire, preferably wound in opposing directions. In other words, the longitudinally extending part of the second antenna part adjacent the side loop is wound in the opposite direction to the bottom of the side loop.

An advantage of the antenna arrangement proposed in GB 2391710 is that the coverage of the field associated with each phase relationship may be high, i.e. the regions of weakness in each field are already limited. Accordingly, switching between phase relationships may not introduce a risk of missed detection. This is in contrast with the multiplexing technique known in the art, where the field of each antenna has significant regions of weakness ("dead zones").

Preferably, the loops comprise a single cable wound in the shape of the loop several times. Preferably, a low resistance wire is used. More preferably, twin core cable is used. When connected to an AC power source, each loop may form part of a series resonant circuit, whereby the transmitted signal is produced when the current moves through the coils making up the antenna.

The antenna may be attached to a tuning module which tunes the capacitance and/or inductance of the circuit so that its resonant frequency matches the frequency of the current from the power source. The connecting wires are preferably coaxial cables. Coaxial cables have minimal field emission; it is desirable in the antenna system to concentrate the field to the loops - the connecting wires should not lose power by emitting unnecessary fields. A tuning module can be used to adjust the values of capacitance and/or inductance to compensate for the capacitance and inductance present in the wires connecting the power source to the antenna. As with any arrangement where two field producing coils are placed in proximity to each other, the fields are affected by mutual inductance between the coils.

The tuning module may have two configurations, each configuration corresponding to one of the phase relationships. This may be needed if a different impedance adjustment is needed to achieve resonance in the circuit configurations corresponding to each phase relationship. One of the configurations may comprise an auto tuning circuit. The other configuration or configurations may be preset as impedance adjustments relative to the auto tuned configuration. According, in use the antenna may be arranged to adopt the same configuration (i.e. the same phase relationship) every time it starts up, whereby the auto tuning circuit is consistently used for the same phase relationship.

The tuning module may switch configurations when the first and second power signals switch phase relationships.

Two transmission protocols are known: full duplex (FDX) and half duplex (HDX). In the FDX protocol, the response from the transponder is sent whilst continuously receiving the interrogating RF energy. The reply transmission from the FDX transponder occurs at a different frequency from the interrogating energy so that the reader can recognise that a response is being sent. In the HDX protocol, the response from the transponder is sent in a window where no interrogating RF field is present, and the reader is listening for a response. The interrogating field for a HDX transponder is therefore intermittent; the periods where the field is present energise the transponder, which then waits for a silent period to send its response. An antenna can be constructed to interrogate and read both HDX and FDX transponders.

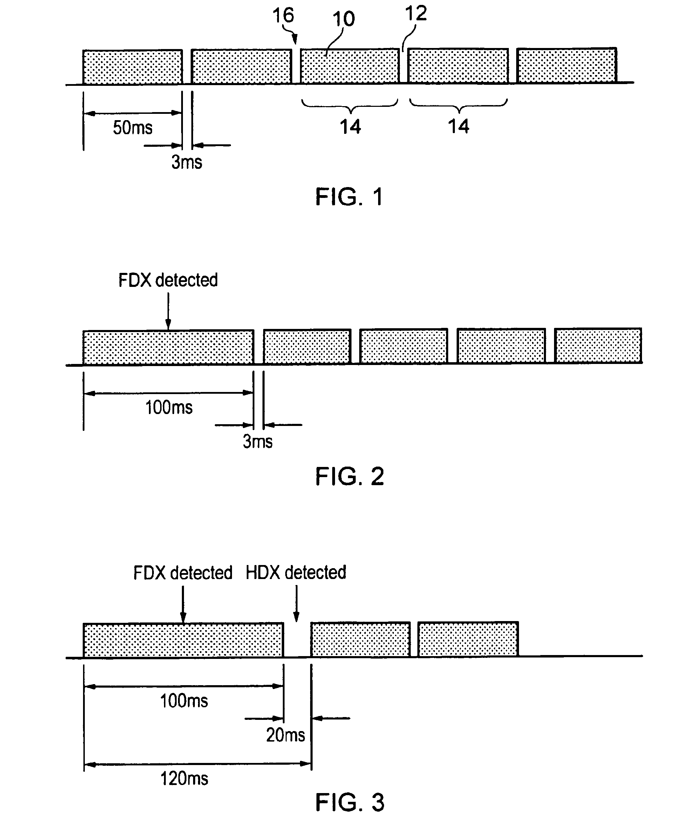

International standard ISO 11785:1996(E) describes one example of the technical attributes of tags and tag readers of the above type used for the radio-frequency identification of animals. Fig. 1 shows relative timing of the transmit and silent (listening) periods for an antenna that can identify both HDX and FDX transponders.

Fig. 1 shows the standard format of a cyclic electric field emitted by a transmitter arranged to energise a RFID tag so that it may be detected. Fig. 1 shows a plurality of cycles 14, each of which have a transmitting phase 10, where an electric field is generated by the transmitter, and a silent phase 12, where no electric field is generated. The standard format shown in Fig. 1 occurs when no transponders are detected by the reader: the transmitting phase 10 lasts for 50ms, and the silent phase lasts for 3ms.

FDX transponders may be detected in the transmitting phase 10. Sometimes, all the information from the FDX tag cannot be completely sent within the 50ms period, e.g. because the tag only started transmitting late in the period or because it only entered the field late in the period. In this case, i.e. when the reader has not validated a FDX response, the transmitter is arranged to extend the transmitting phase 10. The phase is extended for long enough to allow the information from the FDX tag to be completely read or to a maximum of 100ms, to avoid a damaged tag from blocking the system. This extension is illustrated in Fig. 2.

The presence of a HDX tag in the field can be detected within the 3ms silent phase 12. If a HDX tag is present, the duration of the silent phase is then extended to 20ms to allow the information from the HDX tag to be read. When no HDX tag is detected, the silent phase 12 lasts for only 3ms. This maximises the fraction of time that the field is transmitted, which both maximises the time for detecting FDX tags and for energising HDX tags.

Fig. 3 shows a cycle where both phases are extended because an FDX tag and a HDX tag are detected. The maximum cycle duration is 120ms because the phase extensions are limited so that the transmitting phase is not longer than 100ms and the silent phase is not longer than 20ms in operation.

The method of the invention uses a transition between a silent period and transmitting period as a trigger for switching between the phase relationships. For example, the rising edge of a transmit pulse may be arranged to trigger the switching between phase relationships. Accordingly, the antenna may be arranged to alternate its FDX and HDX cycles between the first and second phase relationships.

Low frequency (e.g. RF) signals are preferably used in the detection of transponders, but the antenna system described herein would work equally well at all frequencies. Low frequencies are preferred because they travel through walls and animal tissue more easily. This is well-known.

Other aspects of the invention may include an antenna system arranged to exhibit the functionality outlined above, optionally combined with one or more of corresponding tuning module, power source, transponder reader system. The detection method may be expressed as a method of monitoring livestock, for example, and the antenna system may be correspondingly adapted for mounting on/over the barriers of a livestock passage or race.

Examples of the invention will now be described in more detail with reference to the accompanying drawings, in which
Fig. 1 shows the standard format of a cyclic electric field emitted by a transmitter and is described above;
Fig. 2 shows an extended transmitting phase of the electric field shown in Fig. 1, and is also described above;
Fig. 3 shows an extended transmitting phase and an extended silent phase of the electric field shown in Fig. 1, and is also described above;
Fig. 4 is a schematic circuit diagram for an antenna system according to the invention;
Figs. 5(a) and 5(b) show field lines for an electromagnetic field emitted by adjacent loop antennas having a first and second phase relationship respectively.

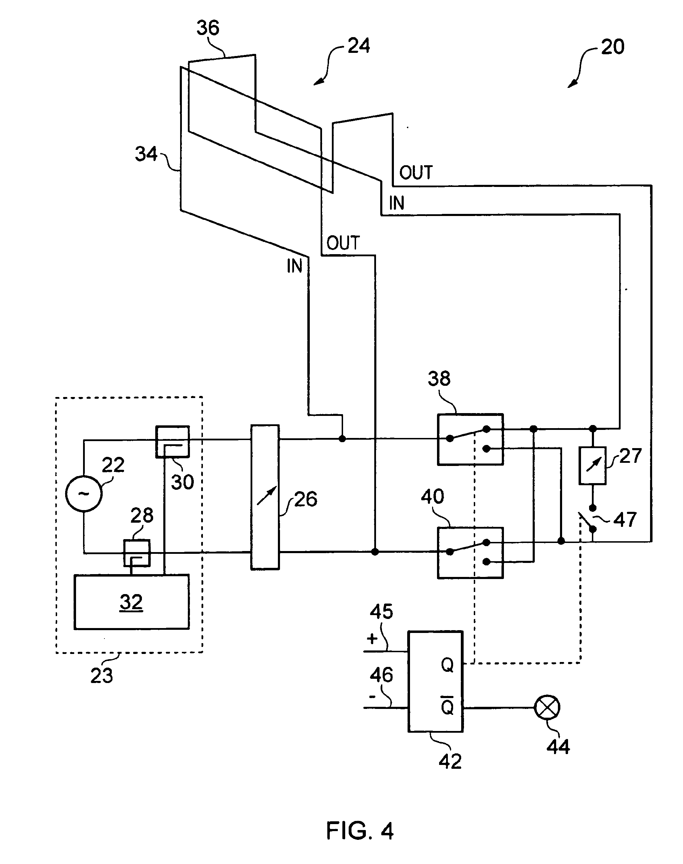

Fig. 4 is a schematic diagram of an antenna system 20 that is an embodiment of the invention. The system comprises an AC power source 22 connected with an antenna 24 to form a series resonant circuit. The antenna 24 has two parts: a side loop 34, which in this embodiment has an oblong shape, and a saddle-type loop 36. The saddle-type loop 36 has two arches connected by elongate arms which run parallel to the plane of the side loop 34. The arches of the saddle-type loop 36 are arranged to bridge a race (not shown) for guiding livestock. The side loop 34 is arranged to be mounted along one side of the race. Each part of the antenna 24 is connected in parallel with the power source 22 via IN and OUT connections respectively.

The power source may be incorporated into a reader 23, e.g. an SDL130 race reader manufactured by Shearwell Data Limited. The power source 22 may be controlled by a controller 32, which may for example include a central processing unit CPU, microprocessor or the like. The signal emitted by the power source 22 can be switched on and off e.g. in accordance with the transmit and silent phases of the protocol discussed above with reference to Figs. 1 to 3.

In this embodiment, the antenna may act as both a means of energising transponders and also as a receiver (reader). Signals picked up by the antenna are detected using couplers 28, 30. The coupled signals are feed to the controller 32 for processing. The couplers are not necessary for antennas whose sole function is to energise transponders.

The power source 22 is connected to a tuning module 26 which has a variable impedance (e.g. a variable capacitance) which can be arranged to compensate for inductance and/or capacitance in other circuit components to achieve resonance. When current flows through the antenna (e.g. at resonance), an electromagnetic field is produced. The reader 23 may include auto tune components (not shown) for fine tuning the compensation achieved by the tuning module 26.

According to the invention, the antenna system is capable of switching a phase relationship between signals received by first and second parts of an antenna. In this embodiment the first and second parts of the antenna 24 are the side loop 34 and saddle-type loop 36 respectively. Each of these loops is arranged to receive a signal derived from the same source, i.e. a signal from power source 22. In this embodiment the phase switching is achieved by a switch configuration that can swap the IN and OUT connections of the saddle-type loop 36 to the power source 22. The switch configuration comprising a first switch 38 arranged to selectively connect the signal from the power source to the IN or OUT connection of the loop 36, and a second switch 40 arranged to selectively connect either the IN or OUT connection of the loop 36 to the return path of the power source.

The first and second switches are respectively controlled by input signals from a trigger unit 42. The trigger unit may be incorporated into the reader 23, e.g. as part of the controller 32, or it may be a stand alone unit. The switches may be configured to switch simultaneously so that there is always a complete circuit formed through the saddle-type loop 36. The trigger unit 42 is also connected to an indicator 44 arranged to show the status of the system, e.g. when a phase switch has taken place.

The trigger unit 42 responds to trigger signals 45, 46. In a preferred embodiment, the trigger signals 45, 46 are derived from the output of power source 22. Referring to Fig. 1, each transmit phase 10 begins with a rising edge 16. Trigger signals 45, 46 may be derived from the rising edge 16 so that it is used as a trigger for the switching operation. Accordingly each cycle 14 has a different phase relationship from the previous cycle. In other words, the system may be automatically arranged to alternate FDX and HDX energising and detection according to a first and second phase conditions. This scheme ensures that the antenna system maintains its phase condition for long enough to enable FDX and HDX transponders in an orientation that is energised by that phase condition to be detected. The phase switching is thus synchronised with the power source's transmit cycle.

Furthermore, by switching the phase relationship in such a regular fashion, a transponder associated with an animal will face interrogation from both field in the time it takes for the animal to pass the antenna.

In the embodiment illustrated in Fig. 4, the phase change in the signals received by the side loop 34 and saddle-type loop 36 caused by operating the switches 38, 40 is 180°. The size of the phase change may not be critical to the invention; other phase changes may achieve the same effect. The effect of the phase change is to change the weak regions of the antenna in an attempt to guarantee detection of transponders in any orientation. When side loop 34 and saddle-type loop 36 receive a signal in phase (bearing in mind that they may be wound in opposite directions) the field emitted has a weak region at the side of the race opposite the side loop 34 for transponders oriented across the race (i.e. perpendicularly to the direction of a detection path along the race). The aim of the phase switch is therefore to achieve a field which does not have this weakness and preferably is capable of guaranteeing detection of transponders with the cross-wise orientation. In the illustrated embodiment, when the side loop 34 and saddle-type loop 36 receive a signal that is 180° out of phase the field emitted has a weak region approximately through the centre of the saddle for transponders oriented along the race (in the direction of the detection path). In the "in phase" situation a transponder having this orientation is guaranteed to be detected because of the configuration of the field lines. According having a weak region for this orientation in the "out of phase" situation is not a disadvantage. Moreover, in the "out of phase" situation the field in the region that corresponds to the weak region in the "in phase" situation is capable (in fact guaranteed) to detect transponders oriented across the race. So a transponder exposed to a pair of cycles having the first and second phase relationship is guaranteed to be detected.

A further advantage associated with the present embodiment is that the weak regions are already very limited in each field. For example, in the "in phase" situation only transponders oriented across the race and located in the weak region risk not being detected. All other orientations are detectable everywhere. Likewise, in the "out of phase" situation only transponders oriented along the race and located in the weak region risk not be detected. Thus, the invention is concerned with reducing what is already a small risk of missing a transponder.

The impedance adjustment required to achieve resonance for one phase relationship may not be the same for other phase relationships. In this case an additional adjustable impedance 27 may be switched in using switch 47 simultaneously with the change of phase relationship. The impedances of the tuning module 26 and the additional impedance adjustment 27 may be preset, i.e. determined before use. In the illustrated embodiment additional capacitance needs to be switched to achieve resonance in the in phase situation. The system is therefore arranged to adopt the out of phase configuration (illustrated in Fig. 4) at start up, e.g. to permit the auto tuning components to fine tune the tuning module 26.

The additional adjustable impedance 27 may be a relative impedance (preferably a capacitance) adjustment, i.e. may be a fixed (e.g. preset) impedance that is switched into the impedance of the tuning module 26 (as fine tuned by the auto tuning components if present). The advantage of this arrangement is that circuit is adaptable to different conditions.

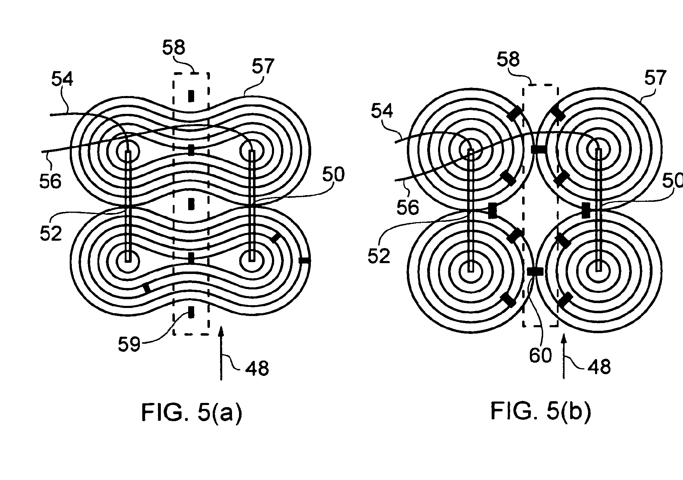

Figs. 5(a) and 5(b) are illustrations of the principles of the invention with another antenna configuration. In this case the antenna comprises two side loops 50, 52 (seen in plan view in Figs. 5(a) and 6(b)) which are mounted on either side of a race with their planes parallel to each other and aligned with the detection path 48 (direction of the race).

In Fig. 5(a) the signals received by the loops via feed lines 54 and 56 are in phase. The fields emitted at resonance resemble toroids around each loop, which merge (complement) each other in the centre of the race. The field lines in the centre zone 58 all lie across the race. This means that a transponder aligned with the race (as indicated by blocks 59) is guaranteed to be detected because it cuts through these field lines. However, it also means that a transponder lying across the race in centre zone 58 will be missed because its circuit will cut through no field lines. Accordingly the phase change of the invention needs to change the field so that at least the centre zone is able to detect transponders which lie across the race. Fig. 5(b) shows one solution, which corresponds to the signals received by the loops via feed lines 54 and 56 being 180° out of phase. Here it can be seen that there are field lines aligned with the detection path 48 in the centre zone. A transponder 60 aligned across the race will cut through these lines and hence be energised.

## Claims

1. A method of detecting transponders moving along a detection path, the method comprising:
providing first and second power signals simultaneously to respective first and second parts (34, 36) of an antenna (24) located on the detection path, the first and second power signals having a first phase relationship, whereby the antenna (24) emits a first electromagnetic field for energising transponders;
determining if any transponders are energised by the first electromagnetic field;
switching the first phase relationship to a second phase relationship, whereby the antenna (24) emits a different second electromagnetic field for energising transponders; and
determining if any transponders are energised by the second electromagnetic field,
**characterised in that**:
the first and second power signals are controlled:
to be delivered to their respective antenna parts (34, 36) during a plurality of transmitting periods defined by a transmission protocol; and
not to be delivered to their respective antenna parts (34, 36) during one or more silent periods defined by the transmission protocol, and
wherein the method includes:
detecting a transition between a silent period and transmitting period, whereby switching the first phase relationship to the second phase relationship is triggered by the detected transition.

2. A method according to claim 1 including switching back to the first phase relationship after determining if any transponders are energised by the second electromagnetic field.

3. A method according to claim 1 including repeatedly switching between the first and second phase relationships.

4. A method according to any one of the preceding claims, wherein the first phase relationship corresponds to an in phase relationship between the first and second power signals provided to the first and second antenna parts (34, 36), and the second phase relationship corresponds to an out of phase relationship between the first and second power signals provided to the first and second antenna parts (34, 36).

5. A method according to claim 4, wherein the in phase relationship is a phase difference of 0° between the first and second power signals at the input to their respective antenna parts (34, 36), and the second phase relationship is a non-zero phase difference between the first and second power signals at the input to the respective antenna parts (34, 36).

6. A method according to any one of the preceding claims, wherein switching the first phase relationship to the second phase relationship comprises reversing the feed direction of one of the first or second power signals.

7. A method according to any one of the preceding claims, wherein providing the first and second power signals includes tuning the impedance of a circuit including an AC power source (22) arranged to generate the first and second power signals and the first and second antenna parts (34, 36) so that the circuit's resonant frequency matches the frequency of the current from the power source (22) when the first and second power signals have the first phase relationship.

8. A method according to claim 7, wherein switching the first phase relationship to the second phase relationship including retuning the impedance of the circuit so that the circuit's resonant frequency matches the frequency of the current from the power source when the first and second power signals have the second phase relationship.

9. A method according to claim 8, wherein retuning the impedance of the circuit comprises connecting a preset impedance into the circuit.

10. A method according to any preceding claim, wherein a detection cycle of the transmission protocol comprises a consecutive transmitting period and silent period, and wherein the method includes alternating the detection cycles between the first phase relationship and the second phase relationship.

11. A method according to claim 10, wherein the duration of each transmitting period and/or silent period is extendible.

12. A method according to claim 10 or 11, wherein the rising edge of a transmit pulse sent to the first and second parts of the antenna is used to trigger switching between the first and second phase relationships.

13. A transponder reader system (20) for detecting transponders moving along a detection path, the system comprising:
an antenna (24) having a first part (34) and a second part (36) mounted on the detection path and arranged to receive a first power signal and a second power signal respectively, for emitting an electromagnetic field for energising transponders on the detection path,
a phase switching device (38, 40) connected to the antenna (24) and arranged to switch a phase relationship between the first and second power signals between a first phase relationship and a second phase relationship, each phase relationship corresponding to a different electromagnetic field configuration emitted by the antenna (24);
an AC power source (22) arranged to generate the first and second power signals; and
a detection device (23) arranged to determine if any transponders are energised by the electromagnetic field emitted by the antenna (24);
**characterised in that**:
the system comprises a controller (32) arranged to control the system to :
deliver the first and second power signals to their respective antenna parts (34, 36) during a plurality of transmitting periods defined by a transmission protocol, and
not deliver the first and second power signals to their respective antenna parts (34, 36) during a one or more silent periods defined by the transmission protocol,
wherein the controller includes a trigger unit (42) arranged to detect a transition between a silent period and transmitting period, and
the phase switching device (38, 40) is arranged to switch between the first phase relationship and the second phase relationship based on a signal from the trigger unit (42).

14. A transponder reader system according to claim 13 including a tuning module (26, 27) arranged to tune the impedance of a circuit including the AC power source (22) and the first and second antenna parts (34, 36) so that the circuit's resonant frequency matches the frequency of the current from the power source (22).

15. A transponder reader system according to claim 14, wherein the tuning module (26, 27) is switchable between two configurations, each configuration corresponding to one of the phase relationships between the first and second power signals.

## Patentansprüche

1. Verfahren zur Detektion von Transpondern, die sich entlang eines Detektionspfads bewegen, wobei das Verfahren Folgendes umfasst:
die gleichzeitige Bereitstellung eines ersten und eines zweiten Stromsignals jeweils für einen ersten und einen zweiten Teil (34, 36) einer entlang des Detektionspfads angeordneten Antenne (24), wobei das erste und zweite Stromsignal eine erste Phasenbeziehung aufweisen, wodurch die Antenne (24) ein erstes elektromagnetisches Feld zur Energieversorgung der Transponder erzeugt;
das Bestimmen, ob Transponder vorliegen, die durch das erste elektromagnetische Feld mit Energie versorgt werden;
das Umschalten der ersten Phasenbeziehung in eine zweite Phasenbeziehung, wodurch die Antenne (24) ein anderes zweites elektromagnetisches Feld zur Energieversorgung der Transponder erzeugt, und
das Bestimmen, ob Transponder vorliegen, die durch das zweite elektromagnetische Feld mit Energie versorgt werden,
**dadurch gekennzeichnet, dass**:
das erste und das zweite Stromsignal gesteuert werden:
um den entsprechenden Antennenteilen (34, 36) während einer Vielzahl an Übertragungszeiten, die durch ein Übertragungsprotokoll definiert werden, zugeführt zu werden; und
um den jeweiligen Antennenteilen (34, 36) während einer oder mehreren Pausezeiten, die durch das Übertragungsprotokoll definiert werden, nicht zugeführt zu werden, und
wobei das Verfahren Folgendes umfasst:
das Detektieren eines Übergangs zwischen einer Pausezeit und einer Übertragungszeit, wobei das Umschalten von der ersten Phasenbeziehung in die zweite Phasenbeziehung durch den detektierten Übergang ausgelöst wird.

2. Verfahren nach Anspruch 1, einschließlich des Zurückschaltens in die erste Phasenbeziehung, nachdem bestimmt wurde, ob Transponder vorliegen, die durch das zweite elektromagnetische Feld mit Energie versorgt werden.

3. Verfahren nach Anspruch 1, einschließlich des wiederholten Hin- und Herschaltens zwischen der ersten und der zweiten Phasenbeziehung.

4. Verfahren nach einem der vorangegangenen Ansprüche, worin die erste Phasenbeziehung einer phasengleichen Beziehung zwischen dem ersten und dem zweiten Stromsignal entspricht, mit denen der erste und der zweite Antennenteil (34, 36) versorgt werden, und die zweite Phasenbeziehung einer phasenverschobenen Beziehung zwischen dem ersten und dem zweiten Stromsignal entspricht, mit denen der erste und der zweite Antennenteil (34, 36) versorgt werden.

5. Verfahren nach Anspruch 4, worin die phasengleiche Beziehung einer Phasenverschiebung von 0° zwischen dem ersten und dem zweiten Stromsignal beim Eingang in die jeweiligen Antennenteile (34, 36) entspricht und die zweite Phasenbeziehung einer Phasenverschiebung zwischen dem ersten und dem zweiten Stromsignal am Eingang in die jeweiligen Antennenteile (34, 36) entspricht, die nicht Null ist.

6. Verfahren nach einem der vorangegangenen Ansprüche, worin das Umschalten von der ersten Phasenbeziehung in die zweite Phasenbeziehung das Umkehren der Einspeisungsrichtung des ersten oder des zweiten Stromsignals umfasst.

7. Verfahren nach einem der vorangegangenen Ansprüche, worin das Bereitstellen des ersten und des zweiten Stromsignals das Einstellen der Impedanz einer Schaltung umfasst, die eine Wechselstromquelle (22), die angeordnet ist, um das erste und das zweite Stromsignal zu erzeugen, und den ersten und den zweiten Antennenteil (34, 36) umfasst, sodass die Resonanzfrequenz der Schaltung mit der Stromfrequenz der Stromquelle (22) abgeglichen wird, wenn das erste und das zweite Stromsignal die erste Phasenbeziehung aufweisen.

8. Verfahren nach Anspruch 7, worin das Umschalten der ersten Phasenbeziehung in die zweite Phasenbeziehung das erneute Einstellen der Impedanz der Schaltung umfasst, sodass die Resonanzfrequenz der Schaltung mit der Frequenz des Stroms der Stromquelle abgeglichen wird, wenn das erste und das zweite Stromsignal die zweite Phasenbeziehung aufweisen.

9. Verfahren nach Anspruch 8, worin das erneute Einstellen der Impedanz der Schaltung das Anschließen einer voreingestellten Impedanz an die Schaltung umfasst.

10. Verfahren nach einem der vorangegangenen Ansprüche, worin ein Detektionszyklus des Übertragungsprotokolls aufeinanderfolgend eine Übertragungs- und eine Pausezeit umfasst und worin das Verfahren das Wechseln des Detektionszyklus zwischen erster Phasenbeziehung und zweiter Phasenbeziehung umfasst.

11. Verfahren nach Anspruch 10, worin die Dauer jeder Übertragungszeit und/oder Pausezeit ausweitbar ist.

12. Verfahren nach Anspruch 10 oder 11, worin die ansteigende Flanke eines an den ersten und den zweiten Teil der Antenne gesendeten Übertragungsimpulses eingesetzt wird, um das Umschalten zwischen der ersten und der zweiten Phasenbeziehung auszulösen.

13. Transponderlesesystem (20) zur Detektion von Transpondern, die sich entlang eines Detektionspfads bewegen, wobei das System Folgendes umfasst:
eine Antenne (24) mit einem ersten Teil (34) und einem zweiten Teil (36), die entlang des Detektionspfads angebracht ist und angeordnet ist, um ein erstes Stromsignal bzw. ein zweites Stromsignal zu empfangen, um ein elektromagnetisches Feld zur Energieversorgung von Transpondern auf dem Detektionspfad auszusenden,
eine Phasenumschaltungsvorrichtung (38, 40), die mit der Antenne (24) verbunden ist und angeordnet ist, um eine Phasenbeziehung zwischen dem ersten und dem zweiten Stromsignal zwischen einer ersten Phasenbeziehung und einer zweiten Phasenbeziehung hin- und herzuschalten, wobei jede Phasenbeziehung einer anderen Ausformung des von der Antenne (24) erzeugten elektromagnetischen Felds entspricht;
eine Wechselstromquelle (22), die angeordnet ist, um das erste und das zweite Stromsignal zu erzeugen; und
eine Detektionsvorrichtung (23), die angeordnet ist, um zu bestimmen, ob Transponder vorliegen, die durch das durch die Antenne (24) erzeugte elektromagnetische Feld mit Energie versorgt werden;
**dadurch gekennzeichnet, dass**:
das System eine Steuervorrichtung (32) umfasst, die angeordnet ist, um das System zu steuern, um:
das erste und das zweite Stromsignal während einer Vielzahl an durch ein Übertragungsprotokoll definierten Übertragungszeiten den jeweiligen Antennenteilen (34, 36) zuzuführen und
das erste und das zweite Stromsignal während einer oder mehreren durch ein Übertragungsprotokoll definierten Pausezeiten den jeweiligen Antennenteilen (34, 36) nicht zuzuführen,
wobei die Steuervorrichtung eine Auslöseeinheit (42) umfasst, die angeordnet ist, um einen Übergang zwischen einer Pausezeit und einer Übertragungszeit zu detektieren und
die Phasenumschaltungsvorrichtung (38, 40) angeordnet ist, um auf der Grundlage eines Signals von der Auslöseeinheit (42) zwischen der ersten Phasenbeziehung und der zweiten Phasenbeziehung hin- und herzuschalten.

14. Transponderlesesystem nach Anspruch 13, einschließlich eines Einstellmoduls (26, 27), das angeordnet ist, um die Impedanz einer Schaltung, die die Wechselstromquelle (22) und den ersten und den zweiten Antennenteil (34, 36) umfasst, so einzustellen, dass die Resonanzfrequenz der Schaltung mit der Frequenz des Stroms der Stromquelle (22) abgeglichen wird.

15. Transponderlesesystem nach Anspruch 14, worin das Einstellmodul (26, 27) zwischen zwei Konfigurationen hin- und hergeschaltet werden kann, wobei jede Konfiguration einer Phasenbeziehung zwischen dem ersten und dem zweiten Stromsignal entspricht.

## Revendications

1. Procédé de détection de transpondeurs se déplaçant le long d'un chemin de détection, le procédé comprenant:
réaliser des premier et deuxième signaux de puissance simultanément à des première et deuxième parties respectives (34, 36) d'une antenne (24) située sur le chemin de détection, les premier et deuxième signaux de puissance ayant une première relation de phase, par quoi l'antenne (24) émet un premier champ électromagnétique pour exciter les transpondeurs;
déterminer si des transpondeurs sont excités par le premier champ électromagnétique;
commuter la première relation de phase à une deuxième relation de phase, moyennant quoi l'antenne (24) émet un deuxième champ électromagnétique différent pour exciter les transpondeurs; et
déterminer si des transpondeurs sont excités par le deuxième champ électromagnétique,
**caractérisé en ce que**:
les premier et deuxième signaux sont commandés:
pour être délivrés à leurs parties d'antenne respectives (34, 36) durant une pluralité de périodes de transmission définies par un protocole de transmission; et
pour ne pas être délivrés à leurs parties d'antenne respectives (34, 36) durant une ou plusieurs périodes de silence définies par le protocole de transmission, et
où le procédé comprend:
détecter une transition entre une période silencieuse et une période de transmission, par quoi la commutation de la première relation de phase à la deuxième relation de phase est déclenchée par la transition détectée.

2. Procédé selon la revendication 1, comprenant la commutation à nouveau à la première relation de phase après avoir déterminé s'il y a des transpondeurs qui ont été excités par le deuxième champ électromagnétique.

3. Procédé selon la revendication 1, comprenant la commutation répétée entre les première et deuxième relations de phase.

4. Procédé selon l'une quelconque des revendications précédentes, dans lequel la première relation de phase correspond à une relation en phase entre les premier et deuxième signaux de puissance fournis aux première et deuxième parties d'antenne (34, 36), et la deuxième relation de phase correspond à une relation hors phase entre les premier et deuxième signaux de puissance fournis aux première et deuxième parties d'antenne (34, 36).

5. Procédé selon la revendication 4, dans lequel la relation en phase est une différence de phase de 0° entre les premier et deuxième signaux de puissance à l'entrée à leurs parties d'antenne respectives (34, 36), et la deuxième relation de phase est une différence de phase non-zéro entre les premier et deuxième signaux de puissance à l'entrée aux parties d'antenne respectives (34, 36).

6. Procédé selon l'une quelconque des revendications précédentes, dans lequel la commutation de la première relation de phase à la deuxième relation de phase comprend l'inversion de la direction d'amenée d'un des premier ou deuxième signaux de puissance.

7. Procédé selon l'une quelconque des revendications précédentes, dans lequel la fourniture des premier et deuxième signaux de puissance comprend l'accord de l'impédance d'un circuit incluant une source de puissance CA (22) agencée pour produire les premier et deuxième signaux de puissance et les première et deuxième parties d'antenne (34, 36) de sorte que la fréquence résonnante du circuit correspond à la fréquence du courant de la source de puissance (22) lorsque les premier et deuxième signaux de puissance ont la première relation de phase.

8. Procédé selon la revendication 7, dans lequel la commutation de la première relation de phase à la deuxième relation de phase incluant l'accord renouvelé de l'impédance du circuit de sorte que la fréquence de résonance du circuit correspond à la fréquence du courant de la source de puissance lorsque les premier et deuxième signaux de puissance ont la deuxième relation de phase.

9. Procédé selon la revendication 8, dans lequel l'accord renouvelé de l'impédance du circuit comprend la connection d'une impédance préréglée dans le circuit.

10. Procédé selon l'une quelconque des revendications précédentes, dans lequel un cycle de détection du protocole de transmission comprend une période de transmission consécutive et une période de silence, et où le procédé comprend l'alternation des cycles de détection entre la première relation de phase et la deuxième relation de phase.

11. Procédé selon la revendication 10, dans lequel la durée de chaque période de transmission et/ou période de silence est extensible.

12. Procédé selon la revendication 10 ou 11, dans lequel le flanc montant d'une impulsion de transmission transmise aux première et deuxième parties de l'antenne est utilisé pour déclencher la commutation entre les première et deuxième relations de phase.

13. Système de lecture de transpondeur (20) pour détecter des transpondeurs se déplaçant le long d'un chemin de détection, le système comprenant:
une antenne (24) ayant une première partie (34) et une deuxième partie (36) montée sur le chemin de détection et agencée pour recevoir un premier signal de puissance et un deuxième signal de puissance respectivement, pour émettre un champ électromagnétique pour l'excitation des transpondeurs sur le chemin de détection,
un dispositif de commutation de phase (38, 40) relié à l'antenne (24) et agencé pour commuter une relation de phase entre les premier et deuxième signaux de puissance entre une première relation de phase et une deuxième relation de phase, chaque relation de phase correspondant à une configuration de champ électromagnétique différente émise par l'antenne (24);
une source de puissance CA (22) agencée pour produire les premier et deuxième signaux de puissance; et
un dispositif de détection (23) agencé pour déterminer s'il y a des transpondeurs qui sont excités par le champ électromagnétique émis par l'antenne (24);
**caractérisé en ce que**:
le système comprend un dispositif de commande (32) agencé pour commander le système pour:
délivrer les premier et deuxième signaux de puissance à leurs parties d'antenne respectives (34, 36) durant une pluralité de périodes de transmission définies par un protocole de transmission, et
ne pas délivrer les premier et deuxième signaux de puissance à leurs parties d'antenne respectives (34, 36) durant une ou plusieurs périodes de silence définies par le protocole de transmission,
où le dispositif de commande comprend une unité de déclenchement (42) agencée pour détecter une transition entre une période de silence et une période de transmission, et
le dispositif de commutation de phase (38, 40) est agencé pour commuter entre la première relation de phase et la deuxième relation de phase sur la base d'un signal de l'unité de déclenchement (42).

14. Système de lecture de transpondeur selon la revendication 13, comprenant un module d'accord (26, 27) agencé pour accorder l'impédance d'un circuit incluant la source de puissance CA (22) et les première et deuxième parties d'antenne (34, 36) de sorte que la fréquence résonnante du circuit correspond à la fréquence du courant de la source de puissance (22).

15. Système de lecture de transpondeur selon la revendication 14, dans lequel le module d'accord (26, 27) peut être commuté entre deux configurations, chaque configuration correspondant à une des relations de phase entre les premier et deuxième signaux de puissance.
